Europäisches Patentamt

European Patent Office

Office européen des brevets

(11) Publication number: **0 319 698**
**A1**

# EUROPEAN PATENT APPLICATION

(21) Application number: **88118062.4**

(22) Date of filing: **29.10.88**

(51) Int. Cl.⁴: **F16H 15/24**

(30) Priority: **12.11.87 IT 368987**

(43) Date of publication of application:
**14.06.89 Bulletin 89/24**

(84) Designated Contracting States:
**DE ES FR GB NL**

(71) Applicant: **S.T.M. S.P.A.**
**Via Pradazzo, 1**
**I-40012 Lippo di Calderara di Reno**
**Bologna(IT)**

(72) Inventor: **Morseli, Mario Antonio c/o S.T.M.**
**S.p.A.**
**Via Pradazzo,1 I-40012**
**Lippo di Calderara di Reno Bologna(IT)**
Inventor: **Vignoli, Altero c/o S.T.M. S.p.A.**
**Via Pradazzo,1 I-40012**
**Lippo di Calderara di Reno Bologna(IT)**

(74) Representative: **Rinaldi, Carlo**
**c.o. Studio Brevetti Nazionali ed Esteri**
**dell'Ing. Carlo Rinaldi & C. s.d.f. Piazza di**
**Porta Castiglione, 16**
**I-40136 Bologna(IT)**

(54) Mechanical stepless speed change gear having friction wheels.

(57) A mechanical stepless speed change gear having friction wheels including: a body (1); a cavity (32) made in said body (1) and housing oil; a first and a second shaft (2,3) supported by said body (1); a movement transmission device (6) placed between a first and a second conical wheel (4,5) opposed one to the other and integral, respectively, to said first and second shaft (2,3); an adjusting element (14) to move said movement transmission device (6); said first and second wheel (4,5) having, each, a concavity turned to the opposite wheel.

FIG. 1

## MECHANICAL STEPLESS SPEED CHANGE GEAR HAVING FRICTION WHEELS

The invention relates to a mechanical stepless speed change gear suitable for transmitting a power between a first driving shaft to a second output shaft with a velocity ratio continuously variable upon external control, to achieve a variable speed of the output shaft while the speed of the driving shaft may rest constant.

Particularly the present invention refers to a mechanical stepless speed change gear which uses two conical friction wheels, kinematically connected each other via a movement transmission device abie to be moved, according to a predetermined adjusting direction, from a first to a second position and vice-versa,to continuously set desired velocity ratios.

Mechanical stepless speed change gears are known, in which a first conical wheel integral with a driving shaft transmits the movement to a second conical wheel integral with an output shaft by means of a movement transmission device placed between said first and said second wheel; said conical wheels being convex one to the other and said movement transmission device being provided with an intermediate shaft having a first and a second plate type clutches arranged respectively at a first and at a second extremity of said shaft and angularly integral thereto; an edge of said first clutch contacting said first wheel and an edge of said second clutch contacting said second wheel. Said intermediate shaft is supported, within said movement transmission device by bearings arranged in a bushing kinematically connected to an adjusting element adapted to move said bushing to an adjusting direction perpendicular to an axis of said intermediate shaft.

Because of said convexity, the contact thrusts allowing the adherence between said first and said second conical wheel and said edges of said first and second plate type clutches, generate turnover movements which bias said intermediate shaft to rotate around an axis coincident with said adjusting direction.

To prevent said rotation it is necessary that said support bearings for said intermediate shaft and said bushing housing said bearings are so dimensioned that they may resist the stresses induced by said turnover movements. Such a dimensioning causes a notable operation hardness for said adjusting element. Besides said turnover movements determine rather high power dissipations because the thrusts thereby caused are taken up by said bearings.

Also by effect of said convexity, the contact pressures. due to said thrusts between the surfaces of said first and second conical wheel and the edges of said first and second plate type clutches, are very high and cause wear phenomena on said surface and on said edges.

In known stepless speed change gears, devices are not provided for preventing said surfaces and said edges to slide when the load applied to said output shaft is greater than a predetermined value or when an user device, kinematically connected to said output shaft, stops for failure or similar inconveniences.

Finally some known stepless speed change gears work under dry conditions therefore they can be damaged by the presence of umidity, powder or grease.

The present invention is intended to remedy these drawbacks. The invention as characterized by the attached claims solves the problem of creating a mechanical stepless speed change gear having friction wheels. By using a stepless speed change gear of this type the following is achieved: the thrusts which stress said movement transmission device create neglegible and controlled turnover movements thereon thus permitting a very small dimensioning of said adjusting element; the sliding of said surfaces and of said edges is voided even when said user device stops.

The advantages achieved by using a stepless speed change gear according to the present invention lie essentially in the fact that superior mechanical efficiencies are obtained in respect to the efficiency obtained by using known stepless speed change gears; the temperature of the lubricating oil housed within said stepless speed change gear is maintained at optimum values; the dimensions and the wear of the structures in contact are minimized.

The invention is describad in great detail below by referring to the drawings which represent not limiting embodiments thereof.

Fig. 1 is a first embodiment of a stepless speed change gear according to the present invention, sectioned by a vertical plane and fitted with a movement transmission device, schematized in a first and in a second position.

Fig. 2 is a detailed view of said movement transmission device.

Fig. 3 is a second embodiment of a stepless speed change gear according to the present invention, sectioned by a vertical plane and fitted with a movement transmission device, schematized in a first and in a second position.

Fig. 4 is a movement transmission device used in the embodiment shown in Figs. 3.6 and 7.

Fig. 5 is an adjusting element adapted to support said movement transmission device.

Figs.6-7 are particular structures of a further embodiment of a stepless speed change gear according to the present invention.

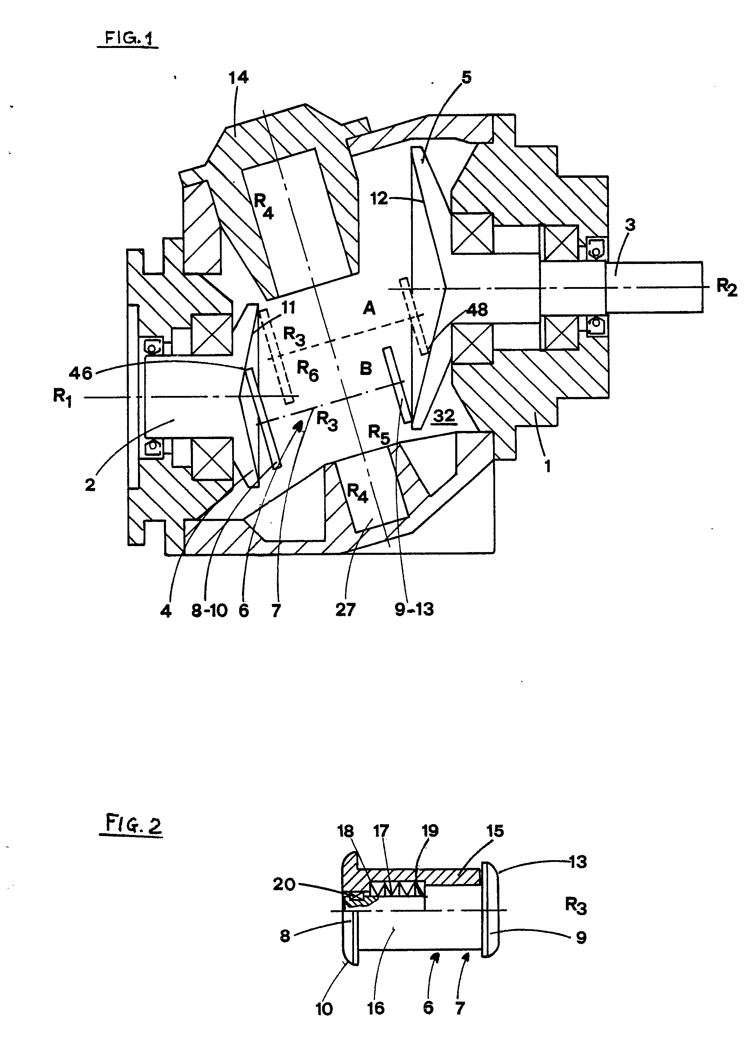

Figs. 1,2 and 5 show a mechanical stepless speed change gear having friction wheels comprising essentially: a body 1 able to support a first driving shaft 2 and a second output shaft 3. Said first driving shaft 2 is connected to an output shaft of an electric motor, preferably an asynchronous three-phases motor, fitted with a known safety device able to prevent damages to said electric motor when the load applied to said output shaft is greater than a predetermined value or when an user device, kinematically connected to said output shaft 3 stops.

Said first shaft 2 rotates around a first rotation axis R1 and said second shaft 3 rotates around a second rotation axis R2; said rotation axis R1, R2 being parallel each other and thence they are coplanar. Said first shaft 2 is integral with a first conical wheel 4 having a first conic surface 11; with a concavity turned to a second conical wheel 5, integral with said second shaft 3; said second wheel 5 being provided with a second conic surface 12 having a concavity turned to said first wheel 4. A movement transmission device 6 is arranged between said first wheel 4 and said second wheel 5; said device 6 having an intermediate shaft 7, a first disk 8 and a second disk 9, angularly integral with a first and a second end portion of said shaft 7, respectively; an edge 10 of said first disk 8 being able to go in contact with said conic surface 11; an edge 13 of said second disk 9 being able to go in contact with said conic surface 12; said contacts being due to elastic means which will be described below.

An adjusting element 14, supported by said body 1, is provided to move with continuity said device 6 from a first position A to a second position B and vice-versa to vary with continuity the velocity ratio between said shaft 2 and said shaft 3.

A first embodiment of said movement transmission device 6 is shown in detail in Fig. 2. In said embodiment said device 6 comprises, in addition to the above described elements, a guide bushing 15, able to house a shaft 16 snugly, to allow shaft 16 to translate therewithin under the thrust of a series of Belleville washers 17 housed in said bushing 15 between a first annular surface 18, made in said bushing 15 and a second annular surface 19, made in said shaft 16; said bushing 15 and said shaft 16 having a mutual rotation axis R3 coplanar to said axis R1, R2.

In order to maintain the angular integrality between said bushing 15 and said shaft 16, a feather 20 is placed in two longitudinal grooves made, respectively, in said bushing 15 and in said shaft 16.

Said Belleville washers 17 are suitable for permitting a first rolling contact 46, between said edge 10 and said surface 11 in rotation, and a second rolling contact 48, between said edge 13 and said surface 12 in rotation for anyone position of said device 6 included within said first and second position A-B (extremes included); said first and said second contacts 46,48 being able to transmit the movement between said first shaft 2 and said second shaft 3 due to the adherence between said edges 10 and 13 and said surface 11 and 12, ensured by the thrust of said Belleville washers 17. The movement between said two positions A and B takes place along an adjusting direction R4 having a predetermined inclination with said axis R1, R2, while said axis R3 remains ever parallel to itself in any position included between said first position A and said second position B; said direction R4 being coplanar to said axis R1, R2, R3.

In the embodiment shown in Fig. 1, in which said shaft 2 is below said shaft 3, said direction R4 is oriented from top left to bottom right in order to permit translations of said device 6 congruent to the geometry of said conical wheels 4 and 5.

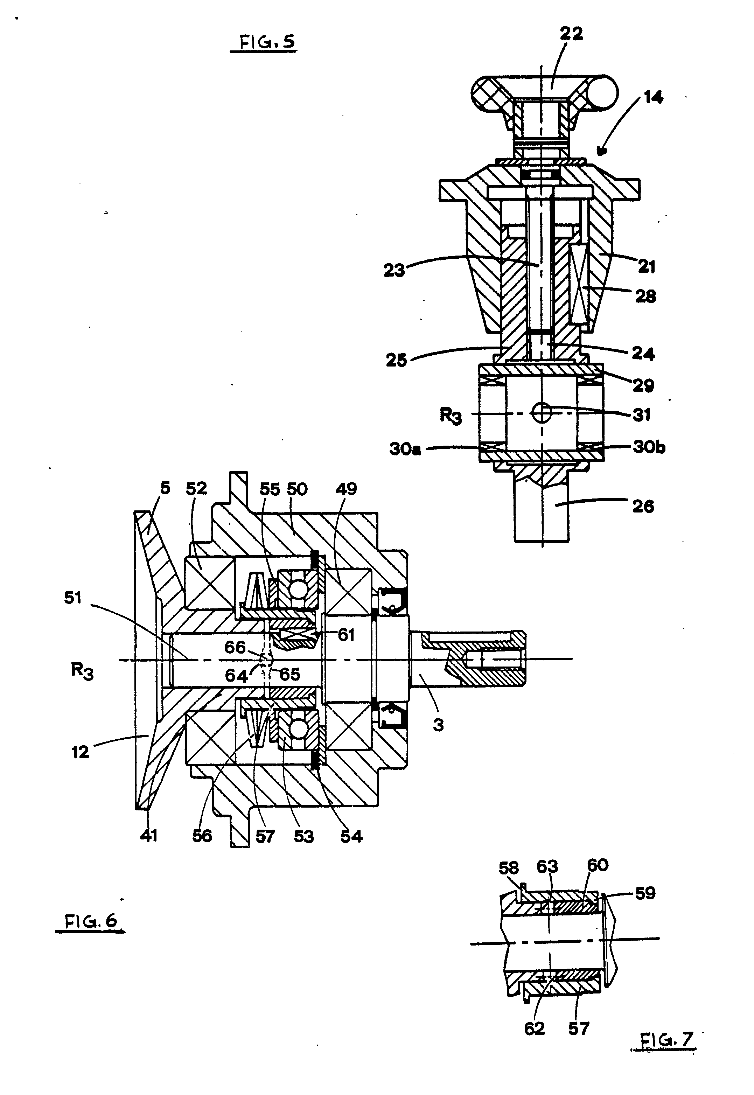

Said adjusting device 14, shown in Fig. 5, includes a bush 21 integral with said body 1; said bush 21 being able to house a screw 23 integral with an operating handwheel for said screw 23. Said screw 23 is able to be screwed in a threaded bore 24, made in a supporting cylindric element 25, having an extremity 26 able to be housed snugly in a guide cavity 27 for said extremity 26; said cavity 27 being made in said body 1.

Said supporting element 25, said extremity 26 and said guide cavity 27 having a mutual symmetry axis coincident with said direction R4.

A feather 28 is placed within two longitudinal grooves made, respectively, in said element 25 and in said bush 21 in order to transmit an upward or downward translation movement to said supporting element 25 when said handwheel 22 rotates clockwise or counterclockwise.

Said supporting element 25 supports a bush 29 able to house a pair of roller bearings 30a,30b supporting said shaft 7; said bush 29 having a hole 31 for the passage of oil from a cavity 32, delimited by said body 1, to lubricate said device 6. In operation, said shaft 7 moves axially according to a direction defined by axis R3 to permit said contacts 46 and 48 in said positions A and B and in the intermediate positions.

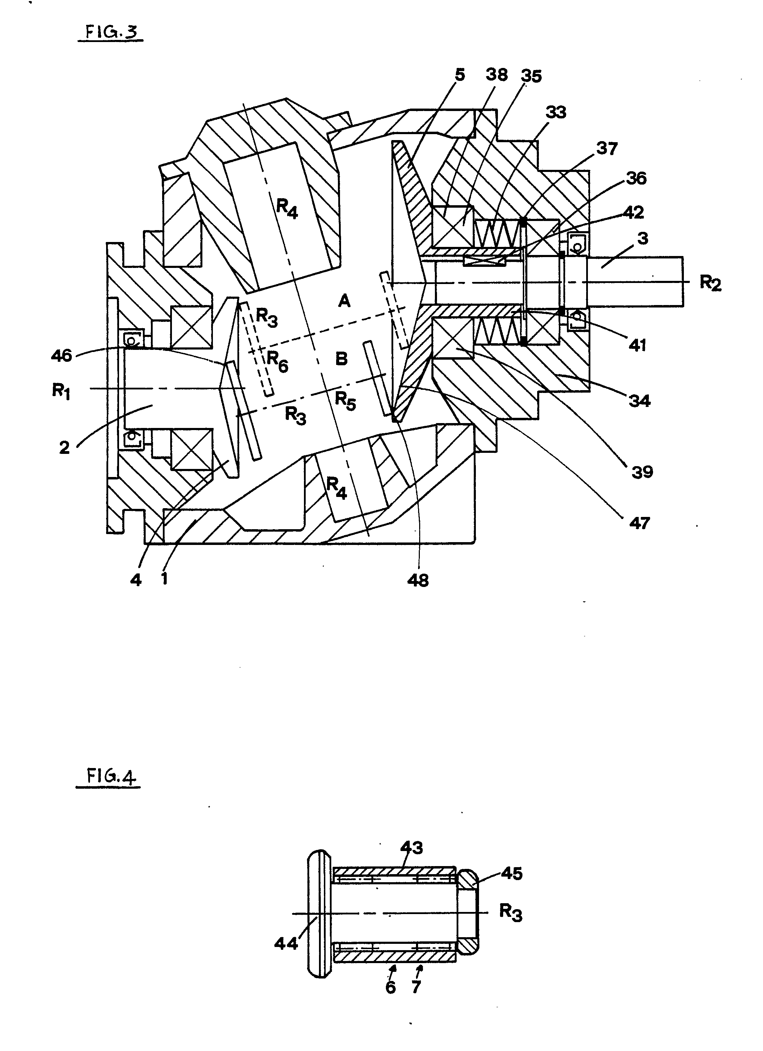

The embodiment of the stepless speed change gear according to the present invention shown in Fig. 3 includes in addition to the structures shown in Fig. 1, a series of Belleville washers 33 placed within a bush 34 having a first ball bearing 35 and a second bearing 36; said Belleville washers 33 being arranged between a stopping ring 37 and an external ring 38 of said bearing 35.

An inner ring 39 of said bearing 35 is pressed on a bush 41 to permit angular integrality between said ring 39 and and said bush 41; said bush 41 being integral with said wheel 5.

The angular integrality between said bush 41 and said shaft 3 is obtained by means of a feather 42 able to permit axial movement of said bush 41 and thence of said second wheel 5 toward the direction defined by said axis R2 under the thrust of said Belleville washers 33.

Said Belleville washers 33 permit said contacts 46.48 for any position of said device 6 included between said first and second positions A, B (extremes included).

The movement transmission device, shown in Fig. 4. includes essentially a shaft 43 integral with a first and a second disks 44, 45, respectively, placed at a first and at a second extremity of said shaft 43; said shaft 43 having a rotation axis R3.

Figs. 6-7 show structural details of a further embodiment of a stepless speed change gear according to the present invention. In particular, a mechanism is disclosed able to adjust the contact forces and, thence, the adherence between said conic surfaces 11 and 12 and said edges 10 and 13, respectively.

Said mechanism includes essentially elements able to transmit the elastic forces of springs, housed in said stepless speed change gear, to said first or second conical wheel 4 or 5, in order to increase, a defined by the resilient characteristics of said springs and by tha necessities imposed by the load applied by said user device, the adherence between said edges 10 and 13 and said conic surfaces 11 and 12.

It is apparent from Figs. 6 and 7 that said output shaft 3 is supported by a bearing 49, housed in a bush 50; said shaft 3 having said axis R2 and a first end 51 suitable for guiding said bush 41 integral with said wheel 5. A second bearing 52 is housed in said bush 50 to support, by cooperating with said end 51, said bush 41. An axial bearing 53 is placed within said bush 50, between a first stopping ring 54 and a second spigot ring 55 suitable for discharging the biasing forces given by a series of Belleville washers 56 on said bearing 53 and on said ring 54.

A first bushing 57 is provided for centering said bearing 53 and said second ring 55; a first and a second end of said bushing 57 having a first and a second annular edges 58, 59, respectively.

Said Belleville washers 56 biasing said first edge 58; said second edge 59 being able to transmit the forces generated by said Belleville washers 56 to a second bushing 60. angularly integral with said end 51 of said shaft 3, via a feather 61. Said bush 41 and said boshing 60 are provided with a first and a second front surfaces 62, 63, respectively; said first surface 62 facing said second surface 63.

Two first gaps 64, diametrically opposite, are made in said first surface 62 ,and two second gaps 65, diametrically opposite, are made in said second surface 63; said gaps 64, 65 resulting from the intersections between the outer surface of said bush 41 and of a first cylinder having an axis perpendicular to the axis of said bush 41, and between the outer surface of said bushing 60 and of a second cylinder having an axis perpendicular to the axis of said bushing 60, respectively. Said first and second cylinders having identical diameters and the said intersections concerning about half way of the surfaces of said first and second cylinders.

Because of graphics reasons, Fig. 6 shows one of said gaps 64 snd one of said gaps 65; it is understood that identical gaps are provided in the part of the device which is not shown.

It is also apparent from FigS. 6-7 that a ball 66 is housed between said first gap 64 and said second gap 65; said ball 66 having a diameter less than the diameter of said first and second cylinders.

In operation, said ball 66 is able, by moving within said gaps 64- 65, to divide the thrusts of said Belleville wahsers 56 into first components parallel and second components perpendicular to said axis R2; the intensity of said components increasing when the load applied to said shaft 3 increases; said second components being able to transmit the movement from said wheel 5 to said second bushing 60 and, therefore, to said shaft 3. Said thrusts increase in a way defined by the resilient characteristic of said Belleville washers 56, characteristic which is choosen such to maintain the adherence between said edges 10,13 and said conic surfaces 11,12, respectively, over a limit defined by the intervention of said safety device of said electric motor.

The operation of a mechanical stepless speed change gear according to the present invention will not be described since it is understood that a man skilled in the art is able to comprehend it by reading this disclosure and by examining the attached drawings. By examining the present disclosure and the attached drawings, we can state that the mechaninal stepless speed change gear according to the present invention permits the reduction of dimensions. Particularly, the dimensions are minimized if the taper ratios of said surfaces 11 and 12 are included between $10°$ and $18°$. Said ratios allow also to transmit the movement between said first shaft 2 and said second shaft 3, maintaining the thrusts on said device 6 on a first straight line R5 joining said contact 46 and a point 47 close to said second contact 48.

In this way said turnover movement for said device 6 is minimized; a very small and controlled componeent of said turnover movement being suitable to prevent vibrations of said device 6 during the operation of the stepless speed change gear.

The choice of the concavity and of said taper ratios allows a better distribution of the contact pressures between said surfaces 11,12 and said edges 10,13, respectively, thus minimizing the wear caused by said contact.

In addition, the choice of said taper ratios allows to minimize the sliding speed of the impression areas; said sliding speed depending in direct relation on the inclination of said adjusting direction R4 with respect to said axis R1-R2.

It has been experimentally prooved that the optimum values for said direction R4, for minimizing dimensions and specific pressures, but maintaining acceptable sliding speed values, range between 70° and 75°.

The decrease of the sliding speeds made it possible to achieve a significant diminution of power losses, due to friction, during the transmission of movement between said shaft 2 and said shaft 3; said diminution permitting a low warming of the elements which go in touch during the functioning of a stepless speed change gear according to the present invention, thence permitting a less wear thereof; said diminution entails also a less warming of the oil housed in said cavity 32.

The above embodiments do not limit the present invention and they can be modified without affecting the essence of the invention.

In a further embodiment a small taper ratio difference has been choosen between said surface 11 and said surface 12. the most acute taper ratio has been made on said surface 12. Said difference allows, on one hand, to control the small components of the contact thrusts, which discharge on said adjusting element 14 and, on the other hand, to increase said thrusts when the angular speed of said second shaft 3 decreases as a consequence of the adjusting movement. Said increase is due to a greater set of said Belleville washers 17 or 33 caused by a slight convergency of the generatrixes of said conic surfaces 11,12.

In a further embodiment a second straight line R6 joins said contact 46 and said contact 48; said second straight line R6 being not much divergent from said first straight line R5, beginning from said first or second contact 46, 48.

The sizes and the materials used do not limit the present invention in which any constructive element may be replaced by an other thecnically equivalent.

## Claims

1. **Mechanical stepless speed change gear having friction wheels** comprising at least: a body (1); a cavity (32) made in said body (1) to house lubricating oil; a first shaft (2) supported by said body (1) and rotating around a first rotation axis (R1); said first shaft (2) being mechanically connected to an output shaft of an electric motor having a safety device; a second shaft (3) supported by said body (1) and rotating around a second rotation axis (R2); said second shaft (3) being connected with an user device; said first and second rotation axis (R1,R2) being contained in one plane; a first and a second conical wheel (4,5) angularly integral, respectively, with said first and said second shaft (2,3); a movement transmission device (6) arranged between said first and second wheel (4,5) to transmit movement from said first to said second shaft (2,3); an adjusting element (14) to set with continuity said device (6) from a first to a second position (A,B) and vice-versa; said first and said second wheel (4,5) having a first and a second conic surface (11,12), respectively; **characterized** by the fact that said first conic surface (11) has a concavity turned to said second wheel (5) and by the fact that said second conic surface (12) has a concavity turned to said first wheel (4).

2. **Mechanical stepless speed change gear** according to claim 1, **characterized** by the fact that said movement transmission device (6) comprises a first and a second disk (8,9); said first disk(8) being integral with a guide bushing (15) for a shaft (l6) integral with said second disk (9); said first disk (8) having a first edge (10) able to define a first rolling contact (46) on said first conic surface (11); said second disk (9) being able to define a second rolling contact (48) on said second conic surface (12); said first and second contact (46,48) being obtained under the bias of springs (17) housed in said bushing (15) and able to let said shaft (16) translate according to an axis (R3) of said bushing (15); a feather (20) being inserted in longitudinal grooves, made in said bushing (15) and in said shaft (16) to ensure the angular integrality between said bushing (15) and said shaft (16); said axis(R3) being coplanar to said axis (R1, R2).

3. **Mechanical stepless speed change gear** according to claim 1,**characterized** by the fact that said second wheel (5) is angularly integral with said second shaft (3), by means of a feather (42) able to permit axial translation of said second wheel (5), relative to said second shaft (3), under the bias of springs (33) placed between said second wheel (5) and a stopping ring (37) for said springs (33); said movement transmission device (6) includ ing a shaft (43) integral with said first and said second disk (44,45), placed at the ends of said shaft (43); said shaft (43) having an axis (R3) coplanar to said axis (R1, R2).

4. **Mechanical stepless speed change gear** according to claim 1, **characterized** by the fact of comprising a mechanism able to transmit the elastic forces of springs, housed in said mechanical stepless speed change gear, to said first or to said second conical wheel (4,5) to increase, in a way defined by the resilient characteristics of said springs, the adherence between said edges (10,13) and said conic surfaces (11,12), respectively.

5. **Mechanical stepless speed change gear** according to claim 1, **characterized** by the fact that said mechanism comprises a bush (50) suited to house: a first bearing (49) supporting said shaft (3); a second bearing (52) supporting said bush (41); a third axial bearing (53) placed between a first stopping ring (54) and a second spigot ring (55); springs (56) biasing said spigot ring (55) and an annular edge (58) present at a first extremity of a first bushing (57) for said bearing (53) and for said ring (55); a second extremity of said first bushing (57) having a second annular edge (59) able to transmit the forces coming from said springs (56) to a second bushing (60) angularly integral with said first bushing (57); a feather (61) being placed between said second bushing (60) and an end (61) of said shaft (3) to obtain the angular integrality between said second bushing (60) and said shaft (3); said second bush (41) being able to slide axially with respect to said end (51); said bush (41) and said bushing (60) being fitted, respectively, with a first and a second front surface (62,63) faced one to the other; first cylindric developed gaps (64) being made in said surface (62), second cylindric developed gaps (65) being made in said surface (63); a ball (66) being arranged between said first gaps (64) and said second gaps (65); said ball (66) having a diameter less than the diameter of said gaps (64,65); said ball (66) being able to transmit movement of said bush (41) to said bush (50) under the stresses equal and contrary of said spring (56) and of said movement transmission device (6).

6. **Mechanical stepless speed change gear** according to claim 1 **characterized** by the fact that said contact (46,48) between said first and second edge (10,13) and said first and second surface (11,12) lies on a first straight line (R5) which contains the thrusts able to transmit the movement from said first to said second shaft; said first straight line (R5) being coplanar to said axis (R1,R2).

7. **Mechanical stepless speed change gear** according to claim 1, **characterized** by the fact that said contact (46,48) lies on a second straight line (R6) not much divergent from said first straight line (R5), beginning from said first contact (46); said second straight line (R6) being coplanar to said axis (R1,R2).

8. **Mechanical stepless speed change gear** according to claim 1, **characterized** by the fact that the taper ratio of said first and second conic surface (11,12) is comprised between $10°$ and $18°$.

9. **Mechanical stepless speed change gear** according to claims 1 and 6, **characterized** by the fact that the taper ratio of said first surface (11) is different from the taper ratio of said second surface (12).

10. **Mechanical stepless speed change gear** according to claim 7, **characterized** by the fact that the taper ratio of said second surface (12) is greater than the taper ratio of said first surface (11).

11. **Mechanical stepless speed change gear** according tn claim 1, **characterized** by the fact that said adjusting element (14) comprises a first bush (21) integral with said body (1) and able to house a screw (23) integral with an operating handwheel (22) for said screw (23); said screw (23) being screwed on a threaded bore (24) made in a supporting cylindric element (25) having an end (26) suit able for being housed snugly in a guide cavity (27) for said end (26); said cavity (27) being made in said body (1); a feather (28) is placed in two grooves made in said supporting element (25) and in said first bush (21); said supporting element (25) being able to support a second bush (29) able to house supporting bearings (30a,30b) for said device (6), allowing said device (6) to translate according to said axis (R3) in order to allow said contact (46,48) in said first and in said second position (A,B) and in the intermediate positions; said second bush (29) having a hole (31) for oil passage from said cavity (32) to said bush (29); said cylindric element (25) being able to define an adjusting direction (R4), in accordance therewith; the movements of said device (6) take place from said first to said second position and vice-versa; said direction (R4) being coplanar to said axis (R1,R2)

12. **Mechanical stepless speed change gear** according to claims 1 and 9, **characterized** by the fact that said adjusting direction (R4) has an inclination included between $70°$ and $75°$ relatively to said first and second rotation axis (R1, R2) to permit translations of said movement transmission device (6) congruent to the geometry of said first and second wheel (4,5).

EP 0 319 698 A1

FIG. 1

FIG. 2

FIG.3

FIG.4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 608 487 (VIZET) <br> * Pages 1-2; figures * | 1 | F 16 H 15/24 |
| A | | 2,6,7, 11,12 | |
| | --- | | |
| X | CH-A- 487 357 (STEINFELS) <br> * Columns 4-5; figures * | 1 | |
| A | | 2,4,6,7 ,8,11 | |
| | --- | | |
| A | GB-A-2 146 394 (LEE) <br> * Page 1; figures * | 1-4,6,7 ,11 | |
| | --- | | |
| A | US-A-2 585 830 (PERRUCA) <br> * Columns 2-3; figures * | 1,3-5 | |
| | --- | | |
| A | DE-A-2 948 429 (HEYNAU) <br> ----- | | |

TECHNICAL FIELDS SEARCHED (Int. Cl.4)

F 16 H 15/00
F 16 H 13/00

The present search report has been drawn up for all claims

| Place of search | Date of completion of the search | Examiner |
|---|---|---|
| THE HAGUE | 14-12-1988 | FLORES E. |

EPO FORM 1503 03.82 (P0401)